# EUROPEAN PATENT APPLICATION

(11) **EP 4 661 596 A1**
(43) Date of publication of application: **10.12.2025**
(21) Application number: 25305587.5
(22) Date of filing: 24.04.2025
(51) Int. Cl.: H05B 45/10, H05B 47/10, H05B 47/18, G06F 13/42

(54) **DIMMING APPARATUS, DIMMING SYSTEM, METHOD FOR DIMMING APPARATUS, AND ELECTRONIC DEVICE**

(30) Priority: 07.06.2024 CN 202410741069
(71) Applicant: SCHNEIDER ELECTRIC INDUSTRIES SAS, 92500 Rueil-Malmaison (FR)
(72) Inventor: LIAO, Shangqing, Shenzhen, 518000 (CN); YANG, Qiming, Shenzhen, 518000 (CN); XIONG, Kun, Shenzhen, 518000 (CN); LI, Huayu, Shenzhen, 518000 (CN); LI, Zhifeng, Shenzhen, 518000 (CN)
(74) Representative: Manitz Finsterwald Patent- und Rechtsanwaltspartnerschaft mbB

(57) **Abstract**

The embodiments of the present disclosure provide a dimming apparatus, a dimming system, a method for the dimming apparatus and an electronic device. An primary dimming apparatus includes a first switching unit connected to a light source; a first driving unit configured to drive the first switching unit; and a first processing unit coupled to the first driving unit and configured to: acquire a dimming signal indicating a channel number to be dimmed and a dimming value corresponding to the channel number; in response to that the channel number includes a first channel number corresponding to the first driving unit, send the dimming value corresponding to the first channel number to the first driving unit; and send the dimming signal to a plurality of secondary dimming apparatuses connected in series between the signal output terminal and a signal return terminal of the primary dimming apparatus.

## Description

### FIELD

Embodiments of the present disclosure generally relate to the field of lighting control, and in particular, to a dimming apparatus, a dimming system, a method for the dimming apparatus, and an electronic device.

### BACKGROUND

A multi-channel dimmer may be applied in the fields of performing arts, daily life, urban landscape, agricultural production and the like. The multi-channel dimmer greatly improves the flexibility, artistry and functionality of a lighting system through the refined control capability. In a conventional multi-channel dimmer, there are generally 2, 4 or 8 channels, and there may be a phenomenon that the number of light sources does not match the number of dimmer channels in the actual use process. For example, if there are 5 light sources, the 4-channel dimmer cannot meet the use requirement at this time, and the 8-channel dimmer results in a waste of 3 channels, which is difficult to meet the use requirements of users.

### SUMMARY

An object of embodiments of the present disclosure is to provide a dimming apparatus, a dimming system, a method for the dimming apparatus, and an electronic device to at least partially solve the above problems and other potential problems.

In a first aspect of the present disclosure, there is provided a primary dimming apparatus. The primary dimming apparatus includes a first switching unit connected to a light source; a first driving unit configured to drive the first switching unit; and a first processing unit coupled to the first driving unit and configured to: acquire a dimming signal indicating a channel number to be dimmed and a dimming value corresponding to the channel number; in response to that the channel number includes a first channel number corresponding to the first driving unit, send the dimming value corresponding to the first channel number to the first driving unit; and send, through a signal output terminal of the primary dimming apparatus, the dimming signal to a plurality of secondary dimming apparatuses connected in series between the signal output terminal and a signal return terminal of the primary dimming apparatus.

In some embodiments, the primary dimming apparatus further includes: a signal conversion unit configured to receive bus data from a bus and generate bus dimming data based on the bus data; a bus signal processing unit coupled to the signal conversion unit and configured to receive the bus dimming data and generate the dimming signal based on the bus dimming data; and an isolation unit coupled between the bus signal processing unit and the first processing unit and configured to allow transmission of the dimming signal and isolate an alternating current signal between the bus signal processing unit and the first processing unit.

In some embodiments, the primary dimming apparatus further includes: a filtering unit coupled to the signal conversion unit and configured to filter the bus data.

In some embodiments, the first processing unit is further configured to: in response to the signal return terminal not receiving a signal returned from the plurality of secondary dimming apparatuses for a predetermined duration, send the dimming signal to the plurality of secondary dimming apparatuses through both the signal output terminal and the signal return terminal.

**In** a second aspect of the present disclosure, there is provided a secondary dimming apparatus. The secondary dimming apparatus includes a second switching unit connected to a light source; a second driving unit configured to drive the second switching unit; and a second processing unit coupled to the second driving unit and configured to: acquire a dimming signal indicating a channel number to be dimmed and a dimming value corresponding to the channel number; in response to that the channel number includes a second channel number corresponding to the second driving unit, send the dimming value corresponding to the second channel number to the second driving unit; and send the dimming signal to another secondary dimming apparatus connected in series with the secondary dimming apparatus.

In some embodiments, the secondary dimming apparatus further includes a channel identification unit coupled to the second processing unit and configured to identify the channel number of the dimming signal and be switched on when the channel number includes the second channel number corresponding to the second driving unit.

In some embodiments, the channel identification unit includes a multi-bit DIP switch configured to identify the second channel number by a switch position number.

In some embodiments, the second processing unit is further configured to: in response to an updated dimming signal being received at the signal return terminal of the secondary dimming apparatus and an original dimming signal reported by another secondary dimming apparatus connected in series with the secondary dimming apparatus being received at the signal output terminal of the secondary dimming apparatus at the same time, allow the updated dimming signal received by the signal return terminal to pass through the secondary dimming apparatus.

In some embodiments, the second processing unit is further configured to: in response to a plurality of updated dimming signals being received at the signal return terminal, allow the plurality of updated dimming signals to pass through the secondary dimming apparatus according to a priority order of the corresponding channel numbers.

In a third aspect of the present disclosure, there is provided a method for a primary dimming apparatus. The method for the primary dimming apparatus includes: acquiring a dimming signal indicating a channel number to be dimmed and a dimming value corresponding to the channel number; in response to that the channel number includes a first channel number corresponding to a first driving unit of the primary dimming apparatus, sending the dimming value corresponding to the first channel number to the first driving unit, the first driving unit being configured to drive a first switching unit connected to a light source; and sending, through a signal output terminal of the primary dimming apparatus, the dimming signal to a plurality of secondary dimming apparatuses connected in series between the signal output terminal and a signal return terminal of a first processing unit.

In some embodiments, the method for the primary dimming apparatus further includes: in response to the signal return terminal not receiving a signal returned from the plurality of secondary dimming apparatus for a predetermined duration, sending the dimming signal to the plurality of secondary dimming apparatuses through both the signal output terminal and the signal return terminal.

In a fourth aspect of the present disclosure, there is provided a method for a secondary dimming apparatus. The method for the secondary dimming apparatus includes: acquiring a dimming signal indicating a channel number to be dimmed and a dimming value corresponding to the channel number; in response to that the channel number includes a second channel number corresponding to a second driving unit of the secondary dimming apparatus, sending the dimming value corresponding to the second channel number to the second driving unit, the second driving unit being configured to drive a second switching unit connected to a light source; and sending the dimming signal to another secondary dimming apparatus connected in series with the secondary dimming apparatus.

In some embodiments, the method for the secondary dimming apparatus further includes: in response to an updated dimming signal being received at the signal return terminal of the secondary dimming apparatus and an original dimming signal reported by another secondary dimming apparatus connected in series with the secondary dimming apparatus being received at the signal output terminal of the secondary dimming apparatus at the same time, allowing the updated dimming signal received by the signal return terminal to pass through the secondary dimming apparatus.

In some embodiments, the method for the secondary dimming apparatus further includes: in response to a plurality of updated dimming signals being received at a signal return terminal of the secondary dimming apparatus, allowing the plurality of updated dimming signals to pass through the secondary dimming apparatus according to a priority order of the corresponding channel numbers.

In a fifth aspect of the present disclosure, there is provided a dimming system. The dimming system includes: a primary dimming apparatus according to the first aspect of the present disclosure; and a plurality of secondary dimming apparatuses according to the second aspect of the present disclosure connected in series between a signal output terminal and a signal return terminal of the primary dimming apparatus.

In a sixth aspect of the present disclosure, there is provided an electronic device. The electronic device includes: a memory configured to store one or more computer instructions; and a processor configured to execute one or more computer instructions stored in the memory to implement the method according to any of the third aspect and the fourth aspect of the present disclosure.

In a seventh aspect of the present disclosure, there is provided a computer-readable storage medium. The computer-readable storage medium having one or more computer instructions stored thereon, wherein the one or more computer instructions are executed by a processor to implement the method according to any of the third aspect and the fourth aspect of the present disclosure.

In an eighth aspect of the present disclosure, there is provided a computer program product. The computer program product includes computer-executable instructions, wherein the computer-executable instructions, when executed by a processor, implement the method according to any of the third aspect and the fourth aspect of the present disclosure.

In an embodiment of the present disclosure, the primary dimming apparatus includes a first switching unit, a first driving unit, and a first processing unit. The first switching unit is connected to a light source. The first driving unit is configured to drive the first switching unit. The first processing unit is coupled to the first driving unit and is configured to acquire a dimming signal indicating a channel number to be dimmed and a dimming value corresponding to the channel number; in response to that the channel number includes a first channel number corresponding to the first driving unit, send the dimming value corresponding to the first channel number to the first driving unit; and send, through a signal output terminal of the primary dimming apparatus, the dimming signal to a plurality of secondary dimming apparatuses connected in series between the signal output terminal and a signal return terminal of the primary dimming apparatus. In this way, the number of the secondary dimming apparatuses can be configured on the basis of the number of the light sources, such that the dimming requirements of any number of light sources can be met, and it will not cause the waste of hardware devices.

It should be understood that the content described in the summary is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 shows a schematic diagram of a conventional 8-channel dimmer, in which 3 idle channels are shown;
FIG. 2 shows a schematic diagram of a dimming system according to an embodiment of the present disclosure, in which a signal flow direction of a plurality of secondary dimming apparatuses when operating normally is shown;
FIG. 3 shows a circuit block diagram of a dimming system according to an embodiment of the present disclosure;
FIG. 4 shows a schematic diagram of a dimming system according to an embodiment of the present disclosure, in which a signal flow direction of a secondary dimming apparatus when having a fault is shown;
FIG. 5 shows a schematic flowchart of a method for a primary dimming apparatus executed by a first processing unit according to an embodiment of the present disclosure;
FIG. 6 shows a schematic flowchart of a method for a secondary dimming apparatus executed by a second processing unit according to an embodiment of the present disclosure; and
FIG. 7 shows a block diagram of an electronic device capable of implementing various embodiments of the present disclosure.

Description of Reference Numerals:
100: dimming system;
10: primary dimming apparatus; 101: first switching unit; 11: first driving unit; 12: first processing unit; 13: signal conversion unit; 14: bus signal processing unit; 15: isolation unit; 16: filtering unit;
20: secondary dimming apparatus; 201: second switching unit; 21: second driving unit; 22: second processing unit; 23: channel identification unit;
30: KNX bus; 40: light source;
200: multi-channel dimmer.

### DETAILED DESCRIPTION

Embodiments of the present disclosure will be described in more detail below with reference to the accompanying drawings. While the embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "comprising" and variations thereof means open inclusive, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

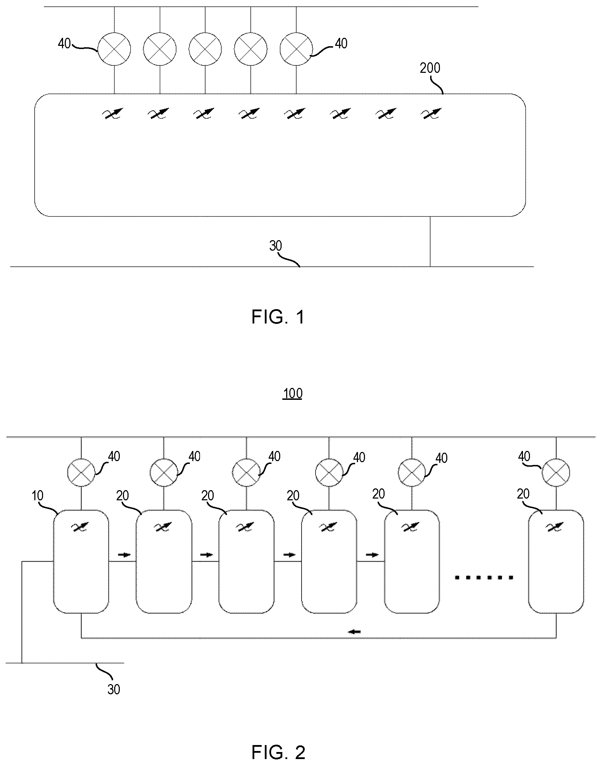

As shown in FIG. 1, in a conventional multi-channel dimmer 200, there are generally 2, 4 or 8 channels, and there may be a phenomenon that the number of light sources 40 does not match the number of dimmer channels in the actual use process. For example, if there are 5 light sources 40, the 4-channel dimmer cannot meet the use requirement at this time, and the 8-channel dimmer results in a waste of 3 channels, which is difficult to meet the use requirements of users.

The embodiments of the present disclosure provide a dimming apparatus, a dimming system, a method for the dimming apparatus and an electronic device. The dimming system 100 may configure a primary dimming apparatus 10 and a plurality of secondary dimming apparatuses 20 based on the number of the light sources 40, so that the number of the dimming apparatuses matches the number of the light sources 40, the use requirements of users can be met, and it will not cause the waste of hardware devices, and the number of debugging operations can be reduced. The principles of the present disclosure will be described in detail below with reference to FIGS. 2 to 4.

Before introducing the primary dimming apparatus 10 and the secondary dimming apparatuses 20, the dimming system 100 is introduced first. As shown in FIG. 2, the dimming system 100 includes a primary dimming apparatus 10 and a plurality of secondary dimming apparatuses 20 connected in series between a signal output terminal and a signal return terminal of the primary dimming apparatus 10.

The dimming system 100 is connected to a KNX bus (Konnex Bus) 30. Structurally, the KNX bus 30 includes one or more data lines, and a plurality of data lines form a distributed network for connecting all devices supporting a KNX protocol. The KNX bus may employ a four-core shielded twisted pair (usually two pairs of wires, one pair for data transmission, the other pair as a backup or power line), forming a tree or ring topology. The data lines are laid and connected according to requirements of a KNX standard, so that signals can be stably and reliably propagated in the whole network. The KNX bus 30 may constitute a shared communication medium. By following a specific communication protocol and data format, the KNX bus 30 enables all devices connected to it to send and receive messages according to predetermined rules. In a KNX system, each device may act as a sender (source) or recipient (target) of data, control other devices by sending packets to the bus, report its own status, or respond to requests from other devices. All devices perform control on other devices or perform corresponding actions according to received instructions by monitoring data traffic on the KNX bus 30 and parsing related messages. The KNX bus 30 is designed to support flexible extension, such that a device can be easily added or removed, and the KNX bus 30 is compatible with various transmission mediums (such as twisted pair, power line, radio frequency and IP network), which facilitates system upgrading and integration of different types of devices.

As shown in FIG. 2, the dimming system 100 includes a primary dimming apparatus 10 and a plurality of secondary dimming apparatuses 20, and each of the primary dimming apparatus 10 and the plurality of secondary dimming apparatuses 20 is connected to a light source 40, so that the states (including switching on, switching off, and brightness) of a plurality of light sources 40 can be controlled. The plurality of secondary dimming apparatuses 20 are connected in series, that is, the signal return terminal of the first secondary dimming apparatus 20 is coupled to the signal output terminal of the primary dimming apparatus 10, the signal output terminal of the first secondary dimming apparatus 20 is coupled to the signal return terminal of the second secondary dimming apparatus 20, and so on, and the signal output terminal of the last secondary dimming apparatus 20 is coupled to the signal return terminal of the primary dimming apparatus 10. The primary dimming apparatus 10 and the secondary dimming apparatuses 20 may implement serial communication through a Universal Asynchronous Receiver/Transmitter (UART). The UART includes two channels Transmit (TX) and Receive (RX), respectively corresponding to two signal lines. The UART is configured to transmit data bidirectionally between devices. The UART may convert the data from a parallel format of the signal output terminal to a serial format (one bit sent one bit) and reconvert a serial data to the parallel format at the signal return terminal.

In an embodiment of the present disclosure, the primary dimming apparatus 10 of the dimming system 100 may receive bus data (also referred to as a bus message) of the KNX bus 30 and parse a dimming signal through converting the bus data, the dimming signal indicating a channel number to be dimmed and a dimming value corresponding to the channel number. Since there is only one primary dimming apparatus 10, a driving unit of the primary dimming apparatus 10 corresponds to a first channel number (e.g., the full 0 switch position below) by default. The number of the secondary dimming apparatuses 20 may be set based on the number of the light sources 40. In order to distinguish the plurality of secondary dimming apparatuses 20 connected in series, the driving unit of each of the plurality of secondary dimming apparatuses 20 corresponds to one second channel number, that is, the driving units of the plurality of secondary dimming apparatuses 20 are in one-to-one correspondence with a plurality of second channel numbers. In this way, a processing unit (such as a first processing unit 12 below) of the primary dimming apparatus 10 first identifies whether the channel number of the dimming signal includes the first channel number. If the channel number includes the first channel number, the processing unit of the primary dimming apparatus 10 sends the dimming value corresponding to the first channel number to the driving unit of the primary dimming apparatus 10, and then sends the dimming signal to the plurality of secondary dimming apparatuses 20 connected in series between the signal output terminal and the signal return terminal of the primary dimming apparatus 10. If the channel number does not include the first channel number, the processing unit of the primary dimming apparatus 10 directly transmits the dimming signal to the plurality of secondary dimming apparatuses 20 connected in series between the signal output terminal and the signal return terminal of the primary dimming apparatus 10 through the UART.

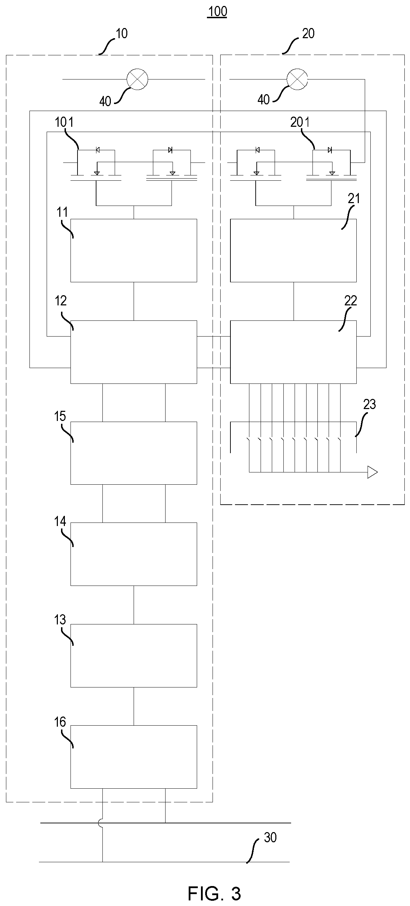

As shown in FIG. 2 and FIG. 3, after the first secondary dimming apparatus 20 directly connected to the signal output terminal of the primary dimming apparatus 10 receives the dimming signal, the processing unit of the first secondary dimming apparatus 20 first identifies whether the channel number of the dimming signal has the second channel number corresponding to the driving unit of the first secondary dimming apparatus 20. If the channel number includes the second channel number corresponding to the driving unit of the first secondary dimming apparatus 20, the processing unit of the first secondary dimming apparatus 20 sends the dimming value corresponding to the second channel number to the driving unit of the first secondary dimming apparatus 20, and then sends the dimming signal to the other secondary dimming apparatus 20 connected in series with the first secondary dimming apparatus 20. If the channel number does not include the second channel number corresponding to the driving unit of the first secondary dimming apparatus 20, the processing unit of the first secondary dimming apparatus 20 directly sends the dimming signal to the other secondary dimming apparatus 20 connected in series with the first secondary dimming apparatus 20.

With the above arrangement, the dimming system 100 can configure the primary dimming apparatus 10 and the plurality of secondary dimming apparatuses 20 based on the number of the light sources 40, so that the number of the light sources 40 can be matched with the number of the dimming apparatuses, the use requirements of users can be met, and it will not cause the waste of hardware devices.

In a conventional multi-channel dimmer 200, the number of channels of a dimmer is limited, for example, if 5 light sources 40 are connected to one 4-channel dimmer and one 2-channel dimmer, each dimmer needs to be debugged once at this time. In an embodiment of the present disclosure, the dimming system 100 has only one primary dimming apparatus 10 connected to the KNX bus 30, and only needs to be debugged once when connected to the KNX bus 30, thereby improving the installation efficiency of an operator.

In an embodiment of the present disclosure, as shown in FIG. 2, FIG. 3 and FIG. 4, the plurality of secondary dimming apparatuses 20 are connected in series between the signal output terminal and the signal return terminal of the primary dimming apparatus 10, and the primary dimming apparatus 10 may send the dimming signal to the plurality of secondary dimming apparatuses 20 connected in series in in two directions of the signal output terminal and the signal return terminal.

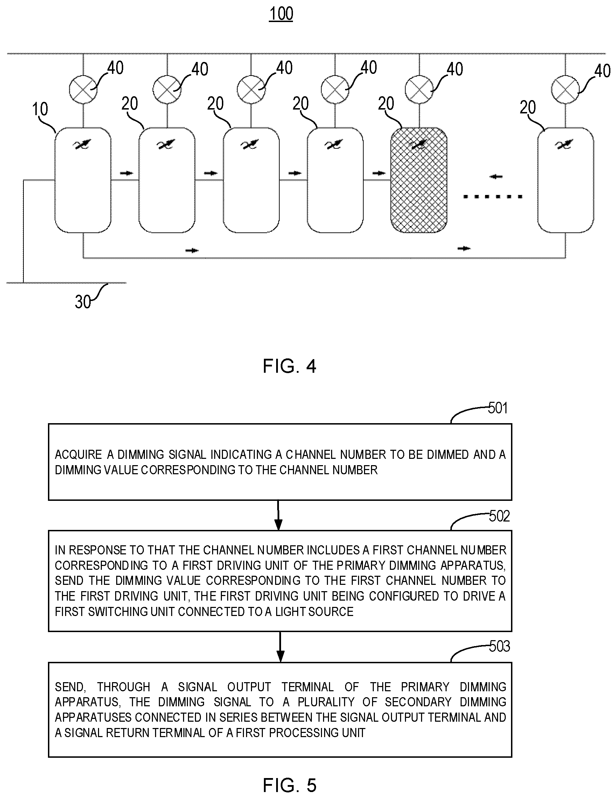

In some embodiments, as shown in FIG. 4, if the signal return terminal of the primary dimming apparatus 10 does not receive a signal returned from the plurality of secondary dimming apparatus 20 for more than a predetermined duration, one or more of the plurality of secondary dimming apparatuses 20 connected in series may have a fault. Taking advantage of the characteristic that the primary dimming apparatus 10 can send the dimming signal bidirectionally along the signal output terminal and the signal return terminal, the dimming signal may be sent to the plurality of secondary dimming apparatuses 20 connected in series along the signal return terminal of the primary dimming apparatus 10. In this way, the dimming system 100 can control the rest of the light sources 40 to operate normally even if one or more of the plurality of serially connected secondary dimming apparatuses 20 may have a fault.

Hereinafter, the primary dimming apparatus 10 of the embodiments of the present disclosure will be described with reference to the accompanying drawings. The left half of FIG. 3 shows a circuit block diagram of a primary dimming apparatus 10 according to an embodiment of the present disclosure. As can be seen from FIG. 3, the primary dimming apparatus 10 according to an embodiment of the present disclosure includes at least a first switching unit 101, a first driving unit 11, and a first processing unit 12.

As shown in FIG. 3, the first switching unit 101 is connected to the light source 40, so as to control the on/off of a circuit connected to the light source 40. The light source 40 may be a Light Emitting Diode (LED), an incandescent lamp, or another type of light-emitting device. When the first switching unit 101 is in a closed state, current may flow through the first switching unit 101 to the light source 40, so that the light source 40 is activated and emits light. When the first switching unit 101 is in an opened state, the light source 40 cannot acquire a current supply, and therefore does not emit light.

The first driving unit 11 is configured to drive the first switching unit 101 and can control the state of the first switching unit 101. For example, the first driving unit 11 controls the voltage or current transmitted to the first switching unit 101 to close or open the first switching unit 101.

In some embodiments, as shown in FIG. 3, the first switching unit 101 may include two metal oxide semiconductor field effect transistors (MOS transistors) to achieve more efficient current control and switching performance. The two MOS transistors may be configured as a high-side switch and a low-side switch to facilitate controlling a power supply connected to the light source 40. The first driving unit 11 may be a MOS transistor driver, which may be used to drive the MOS transistor. The MOS transistor driver can provide appropriate gate voltage and current to ensure that the MOS transistor can switch between on and off states quickly and reliably. In the above configuration, the first driving unit 11 may provide an appropriate signal to control the switching states of the two MOS transistors, thereby controlling a power connection of the light source 40.

In an embodiment of the present disclosure, the first processing unit 12 is coupled to the first driving unit 11, and may send a dimming value to the first driving unit 11 to adjust the state of the light source 40.

As shown in FIG. 2 and FIG. 3, the first processing unit 12 is configured to receive a dimming signal generated by the bus data (also referred to as a bus message) of the KNX bus 30, and the dimming signal indicates a channel number to be dimmed and a dimming value corresponding to the channel number. Since there is only one primary dimming apparatus 10, the first driving unit 11 of the primary dimming apparatus 10 corresponds to the first channel number by default. The first processing unit 12 first identifies whether the channel number of the dimming signal includes the first channel number. If the channel number includes the first channel number, the first processing unit 12 sends the dimming value corresponding to the first channel number to the first driving unit 11, and then sends the dimming signal to the plurality of secondary dimming apparatuses 20 connected in series between the signal output terminal and the signal return terminal of the primary dimming apparatus 10. If the channel number does not include the first channel number, the first processing unit 12 directly sends the dimming signal to the plurality of secondary dimming apparatuses 20 connected in series between the signal output terminal and the signal return terminal of the primary dimming apparatus 10.

In the embodiment of the present disclosure, the primary dimming apparatus 10 may not only control the state of the light source 40 connected to the primary dimming apparatus 10, but also send the dimming signal to the plurality of secondary dimming apparatuses 20 connected in series between the signal output terminal and the signal return terminal of the primary dimming apparatus 10 to adjust the state of the light sources 40 connected to the plurality of secondary dimming apparatuses 20. In this way, the operator can adjust the number of the secondary dimming apparatuses 20 based on the number of the light sources 40, and the primary dimming apparatus 10 can control any number of the light sources 40 without causing waste of hardware devices.

In some embodiments, as shown in FIG. 3, in order to generate the dimming signal based on KNX bus data, the primary dimming apparatus 10 further includes a signal conversion unit 13, a bus signal processing unit 14, and an isolation unit 15.

The signal conversion unit 13 is configured to receive the bus data (bus messages) from the KNX bus 30. After receiving the bus data, the signal conversion unit 13 generates bus dimming data based on a built-in algorithm or logic, and the format and content of the bus dimming data can be identified by the bus signal processing unit 14.

The bus signal processing unit 14 is coupled to the signal conversion unit 13, and the bus signal processing unit 14 may communicate with the signal conversion unit 13. The bus signal processing unit 14 may receive the bus dimming data and generate the dimming signal based on the received bus dimming data. The dimming signal may be used to control the brightness of the light source 40. The bus signal processing unit 14 may send the dimming signal to the first processing unit 12, so that the dimming signal can be understood and executed by the first processing unit 12 or the processing units of the other secondary dimming apparatuses 20.

The isolation unit 15 may provide electrical isolation between two circuits or systems, which may prevent current from flowing directly from one circuit to another, thereby protecting the circuit from voltage fluctuations, electromagnetic interference, or noise. In an embodiment of the present disclosure, the isolation unit 15 is disposed between the bus signal processing unit 14 and the first processing unit 12. Although the isolation unit 15 provides electrical isolation, it still allows the dimming signal to pass through the isolation unit 15. The dimming signal is transmitted from the bus signal processing unit 14 to the first processing unit 12 for further processing. The isolation unit 15 is further configured to isolate an alternating current signal between the bus signal processing unit 14 and the first processing unit 12, thereby avoiding potential interference. In this way, the isolation unit 15 can allow the dimming signal to pass through the isolation unit 15 while blocking the alternating current signal that may cause interference, thereby ensuring stable and efficient operation of the entire system, in particular other devices on the KNX bus 30.

In some embodiments, as shown in FIG. 3, the primary dimming apparatus 10 further includes a filtering unit 16. The filtering unit 16 is coupled to the signal conversion unit 13, and may process the bus data. Through the filtering process, noise and undesired frequency components in the bus data can be removed or reduced, thereby improving the quality of the bus data and ensuring that the signal conversion unit 13 receives accurate and reliable data, thereby ensuring the stability of the whole primary dimming apparatus 10. It should be noted that a configuration and design of the filtering unit 16 need to consider a specific requirement and a possible interference type, so as to achieve an optimal filtering effect.

As shown in FIG. 4, there may be one or more faults in the plurality of secondary dimming apparatuses 20 connected in series between the signal output terminal and the signal return terminal of the primary dimming apparatus 10, which may cause transmission interruption of the dimming signal, so that the light sources 40 after the faulty secondary dimming apparatus 20 cannot work.

In an embodiment of the present disclosure, as shown in FIG. 4, the primary dimming apparatus 10 may send the dimming signal to the plurality of secondary dimming apparatuses 20 connected in series in two directions of the signal output terminal and the signal return terminal. In response to the signal return terminal of the primary dimming apparatus 10 not receiving a signal returned from the plurality of secondary dimming apparatuses 20 for more than a predetermined duration, the first processing unit 12 determines that one or more of the plurality of secondary dimming apparatuses 20 connected in series may have a fault. Taking advantage of the characteristic that the primary dimming apparatus 10 can send the dimming signal bidirectionally along the signal output terminal and the signal return terminal, the first processing unit 12 may send the dimming signal to the plurality of secondary dimming apparatuses 20 connected in series along the signal return terminal of the primary dimming apparatus 10. In this way, even if there may be a fault in one or more of the plurality of secondary dimming apparatuses 20 connected in series, the primary dimming apparatus 10 may control the rest of the light sources 40 to operate normally.

Hereinafter, the secondary dimming apparatus 20 of the embodiment of the present disclosure will be described with reference to the accompanying drawings. FIG. 3 is a circuit block diagram of a secondary dimming apparatus 20 according to an embodiment of the present disclosure. As can be seen from FIG. 3, the secondary dimming apparatus 20 according to an embodiment of the present disclosure includes at least a second switching unit 201, a second driving unit 21 and a second processing unit 22.

As shown in FIG. 3, the second switching unit 201 is connected to the light source 40 to control the on/off of the circuit connected to the light source 40. The light source 40 may be an LED, an incandescent lamp, laser, or other type of light emitting devices. When the second switching unit 201 is in a closed state, current may flow through the second switching unit 201 to the light source 40, so that the light source 40 is activated and emits light. When the second switching unit 201 is in an opened state, the light source 40 cannot acquire a current supply, and therefore does not emit light.

The second driving unit 21 is configured to drive the second switching unit 201 to control the state of the second switching unit 201. For example, the voltage or current transmitted to the second switching unit 201 is controlled to close or open the second switching unit 201.

In some embodiments, as shown in FIG. 3, the second switching unit 201 may include two MOS transistors to achieve more efficient current control and switching performance. The two MOS transistors may be configured as a high-side switch and a low-side switch to facilitate controlling a power line connected to the light source 40. The second driving unit 21 may be a MOS transistor driver, which may be used to drive the MOS transistor. The MOS transistor driver can provide appropriate gate voltage and current to ensure that the MOS transistor can switch between on and off states quickly and reliably. In the above configuration, the second driving unit 21 may provide an appropriate signal to control the switching states of the two MOS transistors, thereby controlling the power connection of the light source 40.

In an embodiment of the present disclosure, the second processing unit 22 is coupled to the second driving unit 21, and may send the dimming value to the second driving unit 21 to adjust the state of the light source 40.

As shown in FIG. 2 and FIG. 3, each of the secondary dimming apparatuses 20 may receive the dimming signal sent by the primary dimming apparatus 10 or another secondary dimming apparatus 20 depending on its position in the serial connection. The second processing unit 22 is configured to receive the dimming signal indicating a channel number to be dimmed and a dimming value corresponding to the channel number. The number of the secondary dimming apparatuses 20 may be set based on the number of the light sources 40, and in order to distinguish the plurality of secondary dimming apparatuses 20, the second driving unit 21 of each secondary dimming apparatus 20 corresponds to a second channel number. In this way, after the first secondary dimming apparatus 20 directly connected to the signal output terminal of the primary dimming apparatus 10 receives the dimming signal, the first secondary dimming apparatus 20 first identifies whether the channel number of the dimming signal includes the second channel number corresponding to the second driving unit 21 of the first secondary dimming apparatus 20. If the channel number includes the second channel number corresponding to the second driving unit 21 of the first secondary dimming apparatus 20, the second processing unit 22 sends the dimming value corresponding to the second channel number to the second driving unit 21 of the first secondary dimming apparatus 20, and then sends the dimming signal to another secondary dimming apparatus 20 connected in series with the first secondary dimming apparatus 20. If the channel number does not include the second channel number corresponding to the second driving unit 21 of the first secondary dimming apparatus 20, the second processing unit 22 directly sends the dimming signal to another secondary dimming apparatus 20 connected in series with the first secondary dimming apparatus 20.

In this way, the operator can adjust the number of the secondary dimming apparatuses 20 based on the number of the light sources 40, so that the control of any number of the light sources 40 can be realized, and it will not cause the waste of hardware devices.

In some embodiments, as shown in FIG. 3, in order to enable the second processing unit 22 to identify whether the channel number of the dimming signal includes the second channel number corresponding to the second driving unit 21 of the secondary dimming apparatus 20, the secondary dimming apparatus 20 further includes a channel identification unit 23.

As shown in FIG. 3, the channel identification unit 23 is coupled to the second processing unit 22, so that the channel identification unit 23 can transmit identified channel number information to the second processing unit 22. The coupling may be through a direct electrical connection or through a communication interface or a data bus. The channel identification unit 23 may analyze and identify an incoming dimming signal to determine the channel number corresponding to the incoming dimming signal. The identification process includes detecting certain characteristics of the dimming signal, such as voltage level, pulse width, frequency or coding information, etc. In this way, the channel identification unit 23 plays a role of signal identification and routing in the multi-channel control system. The channel identification unit 23 can identify the channel number of the dimming signal and be switched on when the channel number matches the second channel number corresponding to the second driving unit 21 of the secondary dimming apparatus 20, thereby realizing precise control and processing of the signal. With this arrangement, different light sources 40 or control regions can be adjusted individually as desired.

In some embodiments, as shown in FIG. 3, the channel identification unit 23 includes a multi-bit DIP switch (Dual In-line Package switch) configured to identify the second channel number by a switch position number.

As shown in FIG. 3, the switch position number is a numerical value consisting of a series of switch position settings on the multi-bit DIP switch. Each switch position may be set to one of two states, representing 1 and 0 in a binary system, respectively. By changing the state of the switch position, different binary values can be generated, thereby representing different channel numbers.

In some embodiments, as shown in FIG. 3, the multi-bit DIP switch is an 8-bit DIP switch, the 8-bit DIP switch has 8 independent switch positions, and each switch position may be set to an on or off state. In a binary system, 8 bits may provide 2⁸(i.e., 256) different combinations. Since the primary dimming apparatus 10 defaults to all 0 (00000000), the number of channels actually available for identification is 255. In this way, if each secondary dimming apparatus 20 is equipped with an 8-bit DIP switch, the dimming value can be sent to 255 second driving units 21. If 255 light sources 40 are controlled by using a conventional 8-channel dimmer, at least 32 8-channel dimmers are required, that is, debugging is required for 32 times, which greatly increases the workload of the operator. In the embodiment of the present disclosure, the primary dimming apparatus 10 is debugged for only one time, the dimming value may be sent to the 255 second driving units 21, thereby improving the installation efficiency of the operator.

In some alternative embodiments, the number N of bits of the multi-bit DIP switch can be set as needed, for example, any one of 1 bit to 16 bits. In this way, it can be determined that the maximum number X of secondary dimming apparatuses 20 that can be connected in series is 2^{N}-1.

As mentioned above, signals are transmitted via UART between the primary dimming apparatus 10 and the secondary dimming apparatuses 20, as well as between two adjacent secondary dimming apparatuses 20.When the state of a certain light source 40 is adjusted, an updated dimming signal (i.e., a downlink signal) may be received by the signal return terminal of the secondary dimming apparatus 20, and an original dimming signal (i.e., an uplink signal) reported by another secondary dimming apparatus 20 connected in series with the secondary dimming apparatus 20 may be received at the signal output terminal of the secondary dimming apparatus 20. At this moment, a conflict occurs in a signal transmission, and the priority of the signal transmission needs to be determined to enable the dimming system 100 to run smoothly.

In an embodiment of the present disclosure, in response to the updated dimming signal being received at the signal return terminal of the secondary dimming apparatus 20 and the original dimming signal reported by another secondary dimming apparatus 20 connected in series with the secondary dimming apparatus 20 being received at the signal output terminal of the secondary dimming apparatus20 at the same time, the second processing unit 22 allows the updated dimming signal received by the signal return terminal to pass through the secondary dimming apparatus 20. In this way, the downlink signal has a high priority, and the state of the light source 40 can be adjusted in time.

As mentioned above, when the state of the light source 40 is adjusted, the updated dimming signal may be received by the signal return terminal of the secondary dimming apparatus 20. If the state of the plurality of light sources 40 needs to be adjusted at the same time, a plurality of updated dimming signals may be received by the signal return terminal of the secondary dimming apparatus 20, and at this time, the priority of the signal transmission needs to be determined to enable the dimming system 100 to run smoothly.

In an embodiment of the present disclosure, in response to the plurality of updated dimming signals being received at the signal return terminal, the second processing unit 22 allows the plurality of updated dimming signals to pass through the secondary dimming apparatus according to a priority order of the corresponding channel numbers. In some embodiments, the priority order may be determined based on the value of the channel number, for example, channels with smaller numbers have higher priority, and the states of the corresponding light sources 40 are adjusted preferentially.

The present disclosure also provides a method for the primary dimming apparatus. FIG. 5 shows a schematic flowchart of the method. The method may be executed by the first processing unit of the primary dimming apparatus. Specifically, at block 501, the first processing unit acquires a dimming signal indicating a channel number to be dimmed and a dimming value corresponding to the channel number from the bus signal processing unit.

Next, at block 502, in response to that the channel number includes a first channel number corresponding to a first driving unit of the primary dimming apparatus, the first processing unit sends the dimming value corresponding to the first channel number to the first driving unit, the first driving unit being configured to drive a first switching unit connected to a light source.

At block 503, the first processing unit sends, through a signal output terminal of the primary dimming apparatus, the dimming signal to a plurality of secondary dimming apparatuses connected in series between the signal output terminal and a signal return terminal of a first processing unit.

In this way, the primary dimming apparatus can not only control the state of the light source connected to the primary dimming apparatus, but also send the dimming signal to the plurality of secondary dimming apparatuses connected in series between the signal output terminal and the signal return terminal of the primary dimming apparatus, so as to adjust the state of the light sources connected to the plurality of secondary dimming apparatuses. The operator can adjust the number of the secondary dimming apparatuses based on the number of the light sources, so that the control of any number of light sources can be realized, and it will not cause the waste of hardware devices.

In some embodiments, in response to the signal return terminal not receiving a signal returned from the plurality of secondary dimming apparatuses for a predetermined duration, the first processing unit sends the dimming signal to the plurality of secondary dimming apparatuses through both the signal output terminal and the signal return terminal. In this way, by using the characteristic that the primary dimming apparatus can transmit the dimming signal bidirectionally along the signal output terminal and the signal return terminal, the first processing unit can also send the dimming signal to the plurality of secondary dimming apparatuses connected in series along the signal return terminal of the primary dimming apparatus. Even if one or more of the plurality of secondary dimming apparatuses in series may have a fault, the primary dimming apparatus may control the rest of the light sources to operate normally.

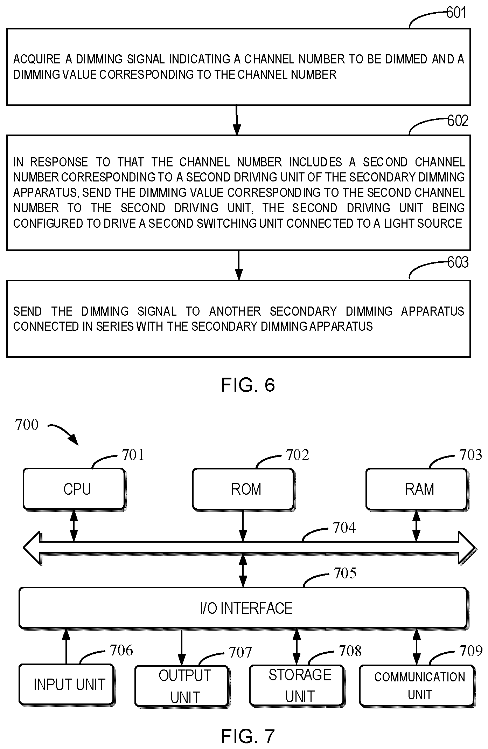

The present disclosure also provides a method for the secondary dimming apparatus. FIG. 6 is a schematic flowchart of the method. The method may be executed by the second processing unit of the secondary dimming apparatus. Specifically, at block 601, the second processing unit acquires a dimming signal indicating a channel number to be dimmed and a dimming value corresponding to the channel number.

Next, at block 602, in response to that the channel number includes a second channel number corresponding to a second driving unit of the secondary dimming apparatus, the second processing unit sends the dimming value corresponding to the second channel number to the second driving unit, the second driving unit being configured to drive a second switching unit connected to a light source.

In block 603, the second processing unit sends the dimming signal to another secondary dimming apparatus connected in series with the secondary dimming apparatus.

In this way, the operator can adjust the number of the secondary dimming apparatuses based on the number of the light sources, so that the control of any number of light sources can be realized, and it will not cause the waste of hardware devices.

In some embodiments, in response to an updated dimming signal being received at the signal return terminal of the secondary dimming apparatus and an original dimming signal reported by another secondary dimming apparatus connected in series with the secondary dimming apparatus being received at the signal output terminal of the secondary dimming apparatus at the same time, the second processing unit allows the updated dimming signal received by the signal return terminal to pass through the secondary dimming apparatus. In this way, the downlink signal has a higher priority, the signal transmission conflict can be avoided, and the state of the light source can be adjusted when the signal is transmitted.

In some embodiments, in response to a plurality of updated dimming signals being received at a signal return terminal of the secondary dimming apparatus, the second processing unit allows the plurality of updated dimming signals to pass through the secondary dimming apparatus according to a priority order of the corresponding channel numbers. In this way, the order of signal transmission may be determined according to the priority of the channel numbers, so that the dimming system runs smoothly.

FIG. 7 shows a schematic block diagram of an electronic device 700 suitable for implementing embodiments of the present disclosure. The electronic device 700 may be the first processing unit or the second processing unit mentioned above. As shown in FIG. 7, the device 700 includes a central processing unit (CPU) 701, which may execute various appropriate actions and processes according to computer program instructions stored in a read-only memory (ROM) 702 or computer program instructions loaded into a random access memory (RAM) 703 from a storage unit. In the RAM 703, various programs and data required for the operation of the device 700 may also be stored. The CPU 701, the ROM 702, and the RAM 703 are connected to each other through a bus 704. An input/output (I/O) interface 705 is also connected to bus 704.

The components in the device 700 are connected to the I/O interface 705, including: an input unit 706, such as a touch screen, a button, etc.; an output unit 707, such as various types of displays, speakers, etc.; a storage unit 708, such as a magnetic disk, an optical disk, etc.; and a communication unit 709, such as a network card, a modem, a wireless communication transceiver, or the like. The communication unit 709 allows the device 700 to exchange information/data with other devices over a computer network such as the Internet and/or various telecommunication networks.

The processes and processing described above, such as those mentioned above, may be performed by the processing unit 701. For example, in some embodiments, processes 501-503 and 601-603 may be implemented as computer software programs that are tangibly included in a machine-readable medium, such as the storage unit 708. In some embodiments, some or all of the computer program may be loaded and/or installed onto the device 700 via the ROM 702 and/or the communication unit 709. One or more of the actions of processes 501-503 and 601-603 described above may be performed when the computer program is loaded onto the RAM 703 and executed by the CPU 701.

Embodiments of the present disclosure relate to a method, an electronic device, and/or a computer program product. The computer program product may include a computer-readable storage medium having computer-readable program instructions thereon for performing various aspects of the present disclosure.

The computer-readable storage medium may be a tangible device that may hold and store instructions for use by the instruction execution device. The computer-readable storage medium may be, for example, but is not limited to, an electrical storage device, a magnetic storage device, an optical storage device, an electromagnetic storage device, a semiconductor storage device, or any suitable combination of the foregoing. More specific examples (a non-exhaustive list) of the computer-readable storage medium include: a portable computer disk, a hard disk, a random access memory (RAM), a read-only memory (ROM), an erasable programmable read-only memory (EPROM or Flash memory), a static random access memory (SRAM), a portable compact disk read-only memory (CD-ROM), a digital versatile disk (DVD), a memory stick, a floppy disk, a mechanical encoding device, a punch card or an in-groove raised structure such as a punch card having instructions stored thereon, and any suitable combination thereof. Computer readable storage media used herein is not to be construed as a transitory signal itself, such as radio waves or other free-propagating electromagnetic waves, electromagnetic waves propagating through a waveguide or other transmission medium (e.g., light pulses through a fiber optic cable), or electrical signals transmitted through wires.

The computer-readable program instructions described herein may be downloaded from a computer-readable storage medium to various computing/processing devices, or downloaded to an external computer or external storage device over a network, such as the Internet, a local area network, a wide area network, and/or a wireless network. The network may include a copper transmission cable, an optical fiber transmission, a wireless transmission, a router, a firewall, a switch, a gateway computer, and/or an edge server. The network interface card or network interface in each computing/processing device receives computer readable program instructions from the network and forwards the computer readable program instructions for storage in a computer readable storage medium in each computing/processing device.

Computer program instructions for carrying out the operations of the present disclosure may be assembly instructions, instruction set architecture (ISA) instructions, machine instructions, machine dependent instructions, microcode, firmware instructions, state setting data, or source code or object code written in any combination of one or more programming languages, including an object oriented programming language such as Smalltalk, C++, etc., and conventional procedural programming languages, such as the "C" language or similar programming languages. The computer-readable program instructions may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider). In some embodiments, various aspects of the present disclosure may be implemented by personalizing a custom electronic circuit, such as a programmable logic circuit, a field programmable gate array (FPGA), or a programmable logic array (PLA), using state information of computer readable program instructions.

Aspects of the present disclosure are described herein with reference to flowcharts and/or block diagrams of methods, apparatuses (systems), and computer program products according to embodiments of the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/actions specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/actions specified in the flowchart and/or block diagram (s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/actions specified in the flowchart and/or block diagram block or blocks.

The flowchart and block diagrams in the figures show architecture, functionality, and operation of possible implementations of systems, methods, and computer program products according to various embodiments of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various embodiments of the present disclosure have been described above, which are exemplary, not exhaustive, and are not limited to the embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements to the techniques in the marketplace, or to enable others of ordinary skill in the art to understand the embodiments disclosed herein.

## Claims

1. A primary dimming apparatus, comprising:
a first switching unit (101) connected to a light source (40);
a first driving unit (11) configured to drive the first switching unit (101); and
a first processing unit (12) coupled to the first driving unit (11) and configured to:
acquire a dimming signal indicating a channel number to be dimmed and a dimming value corresponding to the channel number;
in response to that the channel number includes a first channel number corresponding to the first driving unit (11), send the dimming value corresponding to the first channel number to the first driving unit (11); and
send, through a signal output terminal of the primary dimming apparatus, the dimming signal to a plurality of secondary dimming apparatuses connected in series between the signal output terminal and a signal return terminal of the primary dimming apparatus.

2. The primary dimming apparatus according to claim 1, further comprising:
a signal conversion unit (13) configured to receive bus data from a bus and generate bus dimming data based on the bus data;
a bus signal processing unit (14) coupled to the signal conversion unit (13) and configured to receive the bus dimming data and generate the dimming signal based on the bus dimming data; and
an isolation unit (15) coupled between the bus signal processing unit (14) and the first processing unit (12) and configured to allow transmission of the dimming signal and isolate an alternating current signal between the bus signal processing unit (14) and the first processing unit (12).

3. The primary dimming apparatus according to claim 2, further comprising:
a filtering unit (16) coupled to the signal conversion unit (13) and configured to filter the bus data.

4. The primary dimming apparatus according to any of claims 1 to 3, wherein the first processing unit (12) is further configured to:
in response to the signal return terminal not receiving a signal returned from the plurality of secondary dimming apparatuses for a predetermined duration, send the dimming signal to the plurality of secondary dimming apparatuses through both the signal output terminal and the signal return terminal.

5. A secondary dimming apparatus, comprising:
a second switching unit (201) connected to a light source (40);
a second driving unit (21) configured to drive the second switching unit (201); and
a second processing unit (22) coupled to the second driving unit (21) and configured to:
acquire a dimming signal indicating a channel number to be dimmed and a dimming value corresponding to the channel number;
in response to that the channel number includes a second channel number corresponding to the second driving unit (21), send the dimming value corresponding to the second channel number to the second driving unit (21); and
send the dimming signal to another secondary dimming apparatus connected in series with the secondary dimming apparatus.

6. The secondary dimming apparatus according to claim 5, further comprising:
a channel identification unit (23) coupled to the second processing unit (22) and configured to identify the channel number of the dimming signal and be switched on when the channel number includes the second channel number corresponding to the second driving unit (21).

7. The secondary dimming apparatus according to any of claims 5 to 6, wherein the second processing unit (22) is further configured to:
in response to an updated dimming signal being received at the signal return terminal of the secondary dimming apparatus and an original dimming signal reported by another secondary dimming apparatus connected in series with the secondary dimming apparatus being received at the signal output terminal of the secondary dimming apparatus at the same time, allow the updated dimming signal received by the signal return terminal to pass through the secondary dimming apparatus.

8. A method for a primary dimming apparatus, comprising:
acquiring a dimming signal indicating a channel number to be dimmed and a dimming value corresponding to the channel number;
in response to that the channel number includes a first channel number corresponding to a first driving unit of the primary dimming apparatus, sending the dimming value corresponding to the first channel number to the first driving unit, the first driving unit being configured to drive a first switching unit connected to a light source; and
sending, through a signal output terminal of the primary dimming apparatus, the dimming signal to a plurality of secondary dimming apparatuses connected in series between the signal output terminal and a signal return terminal of a first processing unit.

9. The method of claim 8, further comprising:
in response to the signal return terminal not receiving a signal returned from the plurality of secondary dimming apparatus for a predetermined duration, sending the dimming signal to the plurality of secondary dimming apparatuses through both the signal output terminal and the signal return terminal.

10. A method for a secondary dimming apparatus, comprising:
acquiring a dimming signal indicating a channel number to be dimmed and a dimming value corresponding to the channel number;
in response to that the channel number includes a second channel number corresponding to a second driving unit of the secondary dimming apparatus, sending the dimming value corresponding to the second channel number to the second driving unit, the second driving unit being configured to drive a second switching unit connected to a light source; and
sending the dimming signal to another secondary dimming apparatus connected in series with the secondary dimming apparatus.

11. The method of claim 10, further comprising:
in response to an updated dimming signal being received at the signal return terminal of the secondary dimming apparatus and an original dimming signal reported by another secondary dimming apparatus connected in series with the secondary dimming apparatus being received at the signal output terminal of the secondary dimming apparatus at the same time, allowing the updated dimming signal received by the signal return terminal to pass through the secondary dimming apparatus.

12. A dimming system, comprising:
a primary dimming apparatus according to any of claims 1 to 4; and
a plurality of secondary dimming apparatuses according to any of claims 5 to 7, connected in series between a signal output terminal and a signal return terminal of the primary dimming apparatus.

13. An electronic device, comprising:
a memory configured to store one or more computer instructions; and
a processor configured to execute the one or more computer instructions stored in the memory to implement the method according to any of claims 8 to 11.

14. A computer-readable storage medium having one or more computer instructions stored thereon, wherein the one or more computer instructions are executed by a processor to implement the method of any of claims 8 to 11.

15. A computer program product comprising computer-executable instructions, wherein the computer-executable instructions, when executed by a processor, implement the method of any of claims 8 to 11.
